# EUROPEAN PATENT APPLICATION

(11) **EP 4 224 667 A1**
(43) Date of publication of application: **09.08.2023**
(21) Application number: 23155439.5
(22) Date of filing: 07.02.2023
(51) Int. Cl.: H02J 7/00

(54) **BATTERY CHARGER**

(30) Priority: 08.02.2022 US 202263307781 P
(71) Applicant: Milwaukee Electric Tool Corporation, Brookfield, WI 53005 (US)
(72) Inventor: SNYDER, Joel D., Milwaukee, 53202 (US); ROSENTHAL, Jacob D., Brookfield, 53005 (US); VASHI, Bhaumik M., Milwaukee, 53202 (US)
(74) Representative: Forresters IP LLP

(57) **Abstract**

The present disclosure provides a battery charger (10) including a housing (18), a battery-cooling fan (26), a duct (30), charging electronics (22), and an electronics-cooling fan (34). The housing includes a battery interface with a battery pack attachment portion at least partially surrounded by a battery-facing opening (114). A front opening (86) is defined in the housing and is in fluid communication with the battery-facing opening. A rear opening (90) and a lateral opening (94) are also defined in the housing, between which charging electronics are disposed. The lateral opening is in fluid communication with the rear opening. The lateral opening is disposed at a location along a length of the housing between the front and rear openings. The battery-cooling fan is disposed between the battery-facing opening and the front opening. A duct (30) forms a discrete flow path between the battery-facing opening and the front opening. The electronics-cooling fan is disposed in the housing between the rear and lateral openings.

## Description

### CROSS-REFERENCE TO RELATED APPLICATIONS

This application claims priority to co-pending U.S. Provisional Application No. 63/307,781, filed on February 8, 2022, the entire content of which is incorporated herein by reference.

### FIELD

The present disclosure relates to a battery charger, in particular a battery charger having a battery pack cooling system and a charger cooling system.

### BACKGROUND

Charging of a direct-current (DC) battery pack generates heat within the battery pack and the resulting elevated temperature over an extended duration may reduce the life of the battery pack. The electronic system of the battery charger also generates heat during the charging process, which may degrade the functionality of the battery charger if elevated temperatures are maintained for extended time periods. To limit temperature-related performance degradation, battery chargers often incorporate a cooling system to simultaneously cool the battery charger and the battery pack.

### SUMMARY

The disclosure provides, in one aspect, a battery charger for a battery pack including a housing, a battery-cooling fan, a duct, charging electronics, and an electronics-cooling fan. The housing includes a battery interface with a battery pack attachment portion and a battery-facing opening defined in the battery interface at least partially surrounding the battery pack attachment portion. A front opening is defined in the housing and is in fluid communication with the battery-facing opening. A rear opening and a lateral opening in fluid communication with the rear opening are also defined in the housing. The lateral opening is disposed at a location along the length of the housing between the front opening and the rear opening. The battery-cooling fan is disposed between the battery-facing opening and the front opening. The duct forms a discrete flow path between the battery-facing opening and the front opening. The charging electronics and the electronics-cooling fan are disposed in the housing between the rear opening and the lateral opening.

The disclosure provides, in another aspect, a battery charger including a housing, a duct, a battery-cooling fan, an electronics-cooling fan, and charging electronics. The housing has a front and rear, a lateral side, and a battery interface. The duct is configured to direct a battery-cooling airflow through the front of the housing and through the battery interface. The battery-cooling fan is disposed in the housing along the flow path of the battery-cooling airflow. The housing is configured to direct an electronics-cooling airflow through the lateral side and the rear of the housing, and the electronics-cooling fan is disposed in the housing along the flow path of the electronics-cooling airflow. The charging electronics are disposed in the housing along the flow path of the electronics-cooling airflow. The duct separates the battery-cooling airflow from the electronics-cooling airflow.

The disclosure provides, in another aspect, a battery charger including a housing, a single battery-cooling fan, a duct, charging electronics, and a single electronics cooling fan. The housing includes a battery interface with a battery pack attachment portion at least partially surrounded by a battery-facing exhaust opening. A front intake, a rear exhaust opening, and a lateral intake opening are also defined in the housing. The front intake opening is in fluid communication with the battery-facing exhaust opening. The lateral intake opening is disposed on one side of the housing at a location along the length of the housing between the front intake opening and the rear exhaust opening, and is in fluid communication with the rear exhaust opening. The single battery-cooling fan is mounted to the housing adjacent the front intake opening. The duct forms a discrete flow path from the front intake opening to the battery-facing exhaust opening. The charging electronics are disposed in the housing downstream from the lateral intake opening and upstream of the rear exhaust opening. The single electronics-cooling fan is disposed in the housing adjacent the lateral intake opening.

Other aspects of the disclosure will become apparent by consideration of the detailed description and accompanying drawings.

### BRIEF DESCRIPTION OF THE DRAWINGS

FIG. 1 is a perspective view illustrating a battery charger and battery pack according to the present disclosure.
FIG. 2 is a top view illustrating a battery interface of a battery charger according to FIG. 1.
FIG. 3 is a bottom view illustrating a battery pack according to FIG. 1.
FIG. 4 is a section view illustrating a battery charger and battery pack according to FIG. 1.
FIG. 5 is an bottom view illustrating the battery charger according to FIG. 1.
FIG. 6 is a perspective view illustrating a battery charger according to FIG. 1, including spring clip.
FIG. 7 is a perspective view illustrating a battery charger according to FIG. 1, including a screw and bushing.
FIG. 8 is a perspective view illustrating a printed circuit board assembly and power cord of the battery charger of FIG. 1.
FIG. 9 is a perspective view illustrating components of the battery charger according to FIG. 1.
FIG. 10 is a top view illustrating a battery charger according to FIG. 1, including the backing plate and housing.
FIG. 11 is a section view illustrating an embodiment of a battery charger.
FIG. 12 is a section view illustrating another embodiment of a battery charger.

### DETAILED DESCRIPTION

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways.

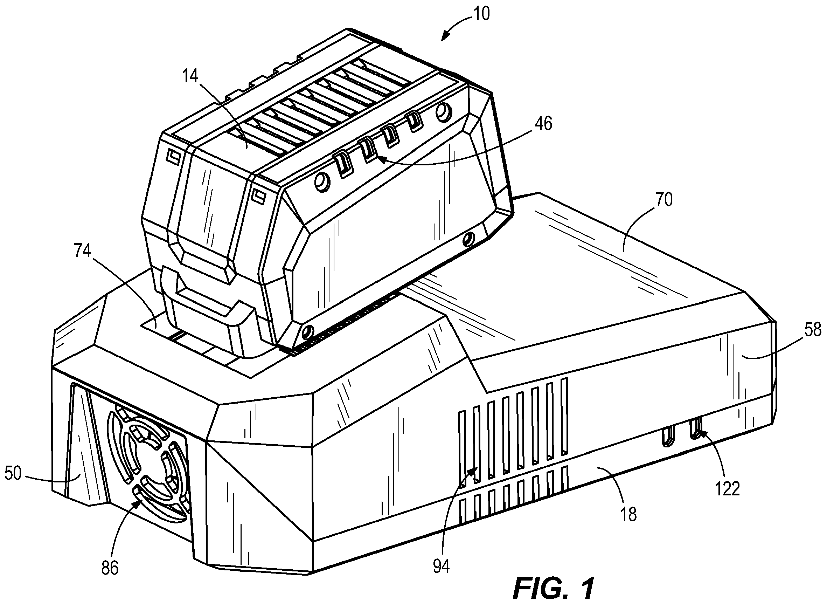

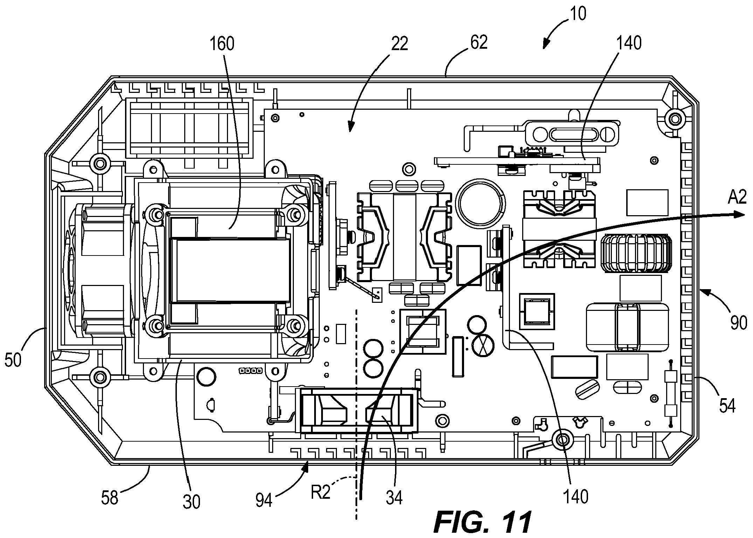

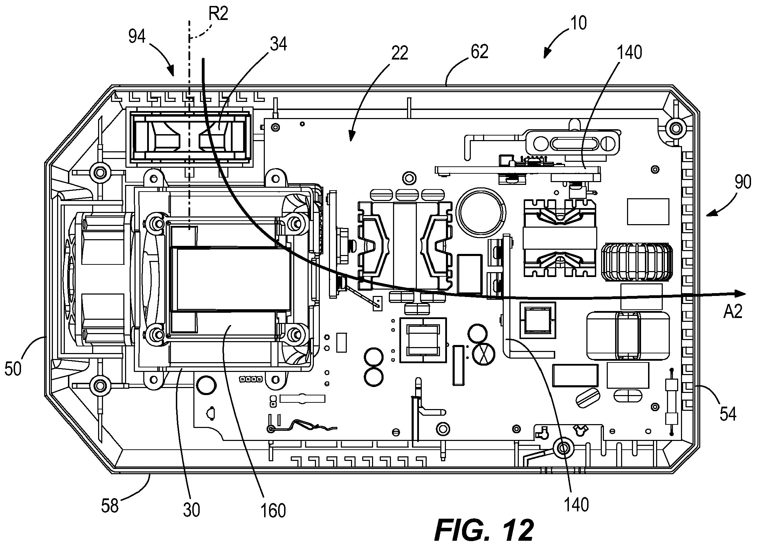

FIGS. 1-4 illustrate a battery charger 10 configured to charge a battery pack 14 (e.g., an 18-volt battery pack, a 12-volt battery pack, or a rechargeable battery pack having a different voltage capacity) as well as provide a battery-cooling airflow A1 and an electronics-cooling airflow A2. The battery charger 10 includes a housing 18 in which charging electronics 22, a battery-cooling fan 26, a duct 30, and an electronics-cooling fan 34 (FIGS. 11, 12) are disposed.

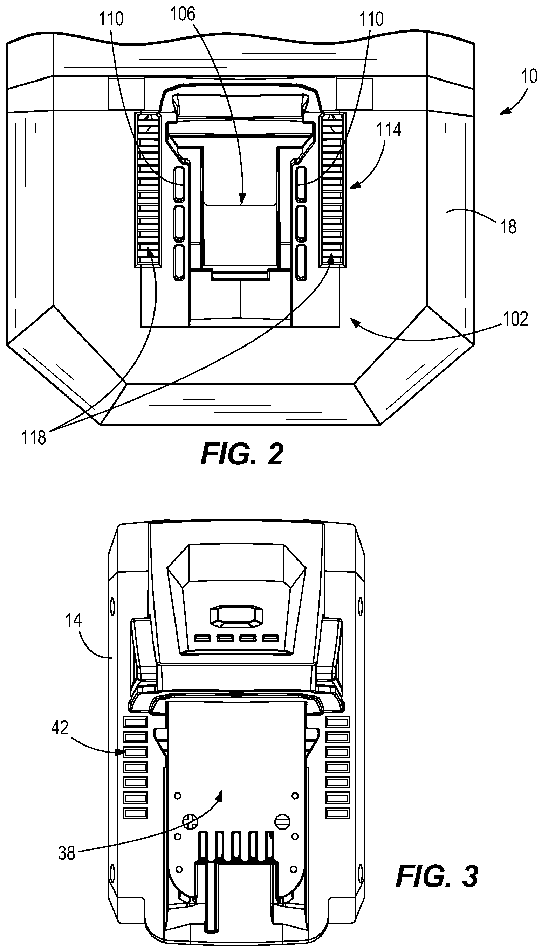

With reference to FIGS. 2 and 3, the battery pack 14 includes a coupling interface 38 configured to engage the battery charger 10 and a charger-facing opening 42 defined in the battery pack 14. The charger-facing opening 42 is disposed on opposite sides of the coupling interface 38. The battery pack 14 may also include an exterior-facing opening 46 disposed on the opposite side of the battery pack 14 from the coupling interface 38. The battery pack 14 includes sensors (e.g., a temperature sensor, a state of charge sensor, etc.) configured to communicate information (e.g., internal temperature of the battery pack, state of charge, etc.) to the battery charger 10.

Returning to FIGS. 1-4, the housing 18 has a front 50, a rear 54 opposite the front 50, lateral sides 58, 62 that extend between the front 50 and rear 54, a bottom 66, and an opposite top 70 including an angled surface 74. In one embodiment, the housing 18 is defined by a pair of clamshell halves 78, 82 coupled together, with one clamshell half 78 defining the front 50, bottom 66, and partially defining the rear 54 and lateral sides 58, 62 and the other clamshell half 82 defining the top 70 and partially defining the rear 54 and lateral sides 58. 62. Other housing configurations may be used instead.

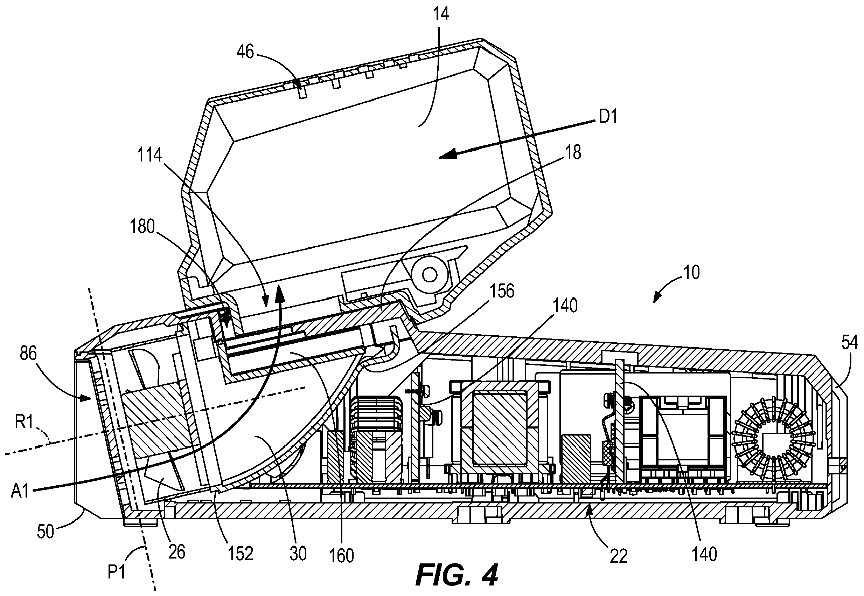

The front 50 defines a front opening 86, the rear 54 defines a rear opening 90, and at least one of the lateral sides 58, 62 defines a lateral opening 94. The front opening 86 has a substantially circular cross-section, although other cross-sectional profiles may be used instead. The front opening 86 is disposed at an angle relative to vertical, that is, a plane P1 (represented in a side view in FIG. 4) defined by the front opening 86 is positioned at an angle relative to a vertical reference line. The rear opening 90 of the present embodiment includes an array of slots positioned along the rear 54, although other configurations of a rear opening 90 may be included instead. The lateral opening 94 is disposed at a location along a length of the housing 18 between the front and rear openings 86, 90. In the present embodiment, a lateral opening 94 is defined in each of the lateral sides 58, 62 and each lateral opening 94 is disposed at a location along a length of the housing 18 between the front and rear openings 86, 90, with one lateral opening 94 disposed closer to the front opening 86 than to the rear opening 90 and one lateral opening 94 disposed closer to the rear opening 90 than to the front opening 86. Each of the lateral openings 94 of the present embodiment includes an array of vertical slots 100. In other embodiments, the housing 18 may include only one lateral opening 94 on either of the lateral sides 58, 62 and the lateral opening 94 may include other configurations (e.g., a substantially circular hole, a plurality of holes arranged in a pattern, etc.)

The top 70 includes a battery interface 102, which may be positioned on the angled surface 74, that defines a battery pack attachment portion 106. In one embodiment, the battery pack attachment portion 106 defines rails 110 that removably receive the battery pack 14 by sliding the battery pack 14 in a pack insertion direction D1. In other embodiments, the battery pack attachment portion 106 defines other structures that engage a battery pack 14 for coupling the battery pack 14 to the battery charger 10. A battery-facing opening 114 is defined in the battery interface 102 and at least partially surrounds the battery pack attachment portion 106. In the present embodiment, the battery-facing opening 114 includes a pair of substantially parallel, linear arrays of slots 118, with each of the arrays positioned on opposite sides of the battery pack attachment portion 106. In other embodiments, the battery-facing opening 114 may be configured in other arrangements at least partially surrounding the battery pack attachment portion 106.

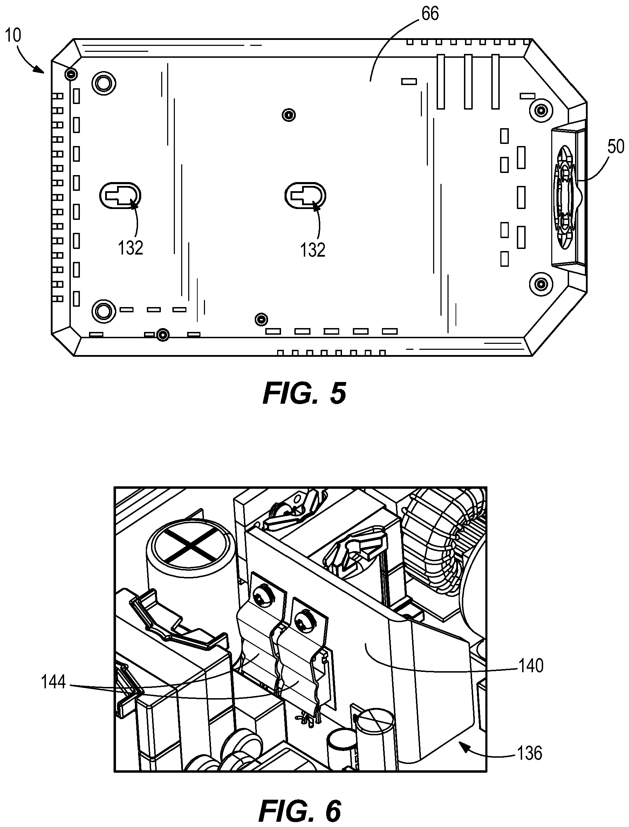

The housing 18 also includes an outlet hole 122 positioned along one of the front 46, rear 50, or lateral sides 58, 62 (illustrated as positioned along lateral side 58 although other locations of the housing 18 may be used), for instance between the lateral opening 94 and the rear 54, through which a power cord 128 extends. The housing 18, either alone, or together with the battery pack 14 may provide a handle or grip surface that allows a user to more easily hold the battery charger 10. With reference to FIG. 5, the housing 18 includes mounting structures 132, for instance, two recesses linearly arranged on the bottom 66 and spaced with approximately four inches therebetween. In the present embodiment, the mounting structures 132 receive the heads of fasteners to couple the battery charger 10 to a wall, wall stud, etc. In other embodiments, the mounting structures 132 may be arranged in other quantities or layouts or be configured to receive other structures (e.g., hooks) to mount the battery charger 10.

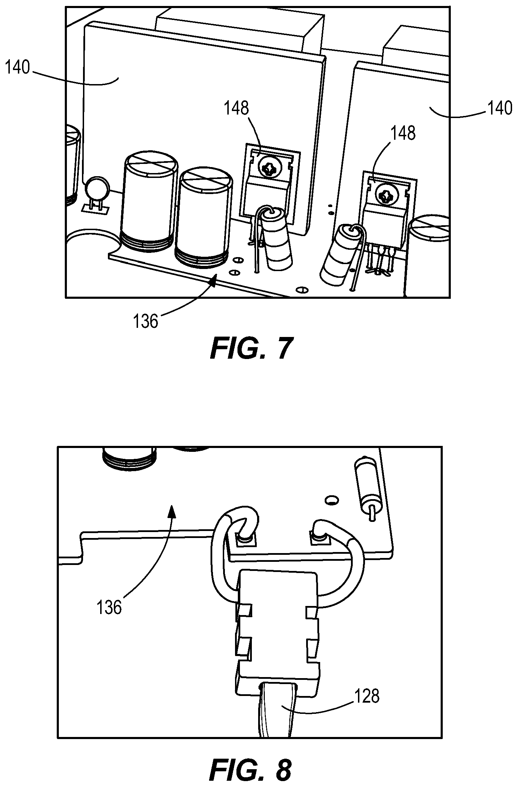

With reference to FIG. 4, the charging electronics 22 are disposed in the housing 18 between the rear opening 90 and the lateral opening 94. The charging electronics 22 include a printed circuit board assembly 136 ("PCBA") that includes a cooling fin 140 or other heat sink that extends upward from the PCBA 136 and a controller that controls operation of the battery charger 10. The cooling fin 140 may be mounted to the PCBA 136 by spring clips 144 (shown in FIG. 6), a screw and bushing assembly 148 (shown in FIG. 7), or other mounting structure. In some embodiments, the charging electronics 22 may contain more than one cooling fin 140 or other heat sink structure. The controller receives information from the battery pack 14 and the battery charger 10 (e.g., temperature of the battery pack 14, state of charge of the battery pack 14, temperature of the battery charger 10, etc.) and controls the operative state of the battery charger 10 (e.g., the rotational speed of the battery-cooling fan 26 and the electronics-cooling fan 34). A power cord 128 is mechanically and electrically coupled to and extends from the PCBA 136 through the outlet hole 122 to electrically couple the battery charger 10 to an external power source (e.g., alternating-current mains power) for charging the battery pack 14. As shown in FIG. 8, the power cord 128 may be mechanically coupled to the PCBA 136 via a standard strain relief connection or other appropriate connection (e.g., a labyrinth strain relief connection) that provides strain relief when a tensioning force is applied to the power cord 128.

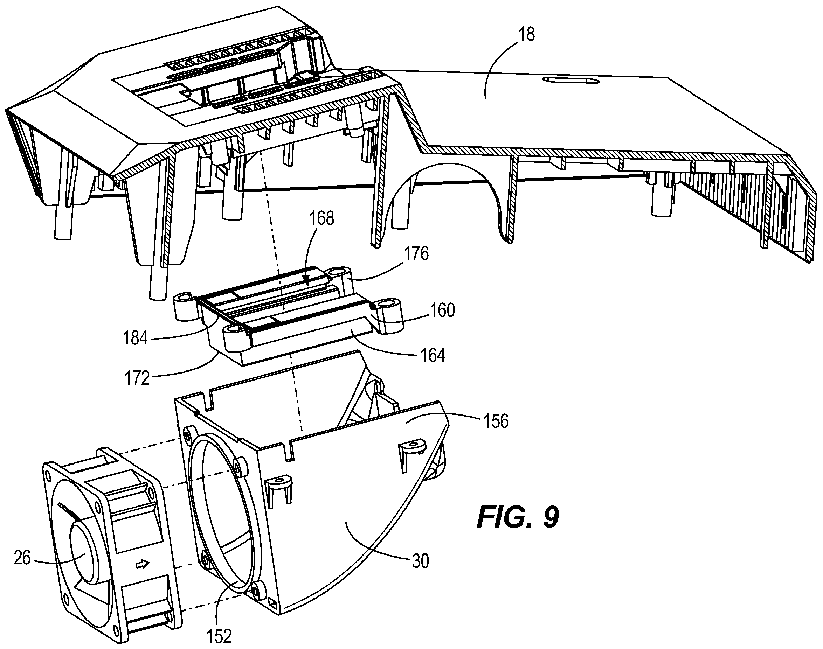

With reference to FIGS. 4 and 9, the battery-cooling fan 26 (e.g., an axial fan) is disposed in the housing 18 between the battery-facing opening 114 and the front opening 86. In the present embodiment, the battery-cooling fan 26 is coupled to the housing 18 adjacent the front opening 86. In other embodiments, the battery-cooling fan 26 may be positioned at another location between the front opening 86 and the battery-facing opening 114, for instance, adjacent the battery-facing opening 114. The battery-cooling fan 26 defines a rotational axis R1. In the present embodiment, the rotational axis R1 of the battery-cooling fan 26 is parallel to the pack insertion direction D1. In other embodiments, the battery-cooling fan 26 may be positioned at another angle relative to the pack insertion direction D1. The rotational speed of the battery-cooling fan 26 is variable, that is, the battery-cooling fan 26 may rotate at different speeds based on measured parameters of the battery pack 14 (e.g., a higher speed when the temperature of the battery pack 14 is higher or when the state of the charge of the battery pack 14 necessitates a greater cooling capacity).

With continued reference to FIGS. 4 and 9, the duct 30 is disposed in the housing 18 between the front opening 86 and the battery-facing opening 114 and separates the battery-cooling fan 26 from the charging electronics 22. In the present embodiment, a first end 152 of the duct 30 is coupled to the battery-cooling fan 26 and a second end 156 of the duct 30 is coupled to the housing 18 adjacent the battery-facing opening 114, with the battery-facing opening 114 positioned such that it is within the cross-sectional area defined by the duct 30. The second end 156 of the duct 30 is disposed at a substantially right angle (i.e., 90 degrees) from the first end 152. In other embodiments, the first and second ends 152, 156 of the duct 30 may be arranged at another angle greater than or less than 90 degrees. The second end 156 of the duct 30 defines a sealing interface with the housing 18 that efficiently seals the duct 30 and housing 18 thereby reducing leakage of air between the duct 30 and the housing 18. For instance, in some embodiments, an efficiently-sealed seal interface contains at least 90% of the airflow in the duct. In other embodiments, the seal interface contains at least 95% of the airflow in the duct 30. In still other embodiments, the seal interface contains at least 99% of the airflow in the duct 30. In yet other embodiments, the seal interface contains 100% of the airflow in the duct 30.

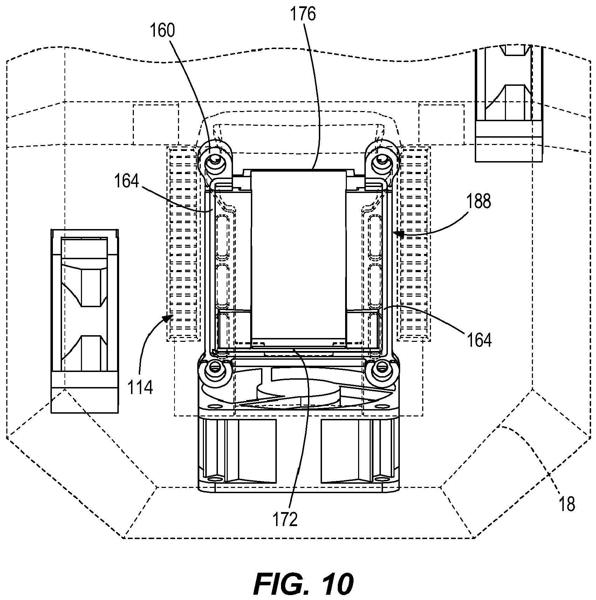

With reference to FIGS. 4, and 9-12, a backing plate 160 is disposed within the cross-sectional area of the duct 30 at the second end 156 of the duct 30 and is coupled to the housing 18 (e.g., via fasteners through bosses in the backing plate 160), with the battery-facing opening 114 positioned on opposites sides 164 of the backing plate 160. The backing plate 160 includes a recess 168 that receives a terminal block to electrically couple the battery pack 14 to the charging electronics 22.

The backing plate 160 and the housing 18 define a seal interface therebetween to reduce water ingress between the backing plate 160 and the housing 18, thereby directing water into the duct 30. As illustrated, the seal interface extends along a first end 172 and sides 164 of the backing plate 160, and at least partially along the second end 176. In other embodiments, the seal interface may extend partially or wholly about other portions of the perimeter of the backing plate 160. The seal interface between the backing plate 160 and the housing 18 may be formed by a tongue-in-groove joint 180. In one embodiment, the tongue-in-groove joint 180 includes a seal 184 (e.g., an elastomeric seal). The seal 184 is disposed at least partially in a groove 188 of the backing plate 160 that extends at least partially about the perimeter of the backing plate 160 and is also disposed at least partially in a corresponding groove of the housing 18. When the backing plate 160 is coupled to the housing 18, the sides of the seal interface are positioned inwardly of the battery-facing opening 114. In other embodiments, the seal interface may be formed by other types of joints between the backing plate 160 and the housing 18.

With reference to FIGS. 11 and 12, the electronics-cooling fan 34 is disposed in the housing 18 between the rear opening 90 and the lateral opening 94. The electronics-cooling fan 34 of the present embodiment is an axial fan that defines a rotational axis R2. The electronics-cooling fan 34 may instead be another type of fan (e.g., a blower or centrifugal fan). In the present embodiment, the rotational axis R2 of the electronics-cooling fan 34 is parallel to the PCBA 136, and the rotational axis R1 of the battery-cooling fan 26 and the rotational axis R2 of the electronics-cooling fan 34 form skew lines, that is, the rotational axes R1, R2 of the battery- and electronics-cooling fans 26, 34 will not intersect. In other embodiments, the electronics-cooling fan 34 is disposed such that the rotational axis R2 is not parallel to the PCBA 136 (e.g., directed to intersect the PCBA 136). The electronics-cooling fan 34 is a variable-speed fan (e.g., the speed depends on conditions of the battery charger 10, for instance, the temperature of the charging electronics 22).

In a first embodiment (FIG. 11), the electronics-cooling fan 34 is disposed in the housing 18 adjacent a lateral opening 94 that is positioned approximately midway along the length of the housing 18 between the front opening 86 and rear opening 90, coupled to the PCBA 136 adjacent the edge of the PCBA 136 and the lateral side 58 of the housing 18.

In another embodiment (FIG. 12), the electronics-cooling fan 34 is disposed in the housing 18 adjacent a lateral opening 94 that is positioned along the length of the housing 18 closer to the front opening 86 than to the rear opening 90 of the housing 18 and is coupled to the housing 18. In still other embodiments, the electronics-cooling fan 34 may be disposed elsewhere in the housing 18.

With reference to FIGS. 4, 11, and 12, the battery-cooling fan 26 (e.g., a single battery-cooling fan 26 mounted to the housing 18 in the present embodiment) is disposed along a flow path of, and generates, a battery-cooling airflow A1 that is directed by the duct 30 through the front opening 86 and the battery-facing opening 114, which are in fluid communication. In the present embodiment, the battery-cooling airflow A1 is directed from the front 50 of the battery charger 10 through the front opening 86 (i.e., a front intake opening), through the duct 30 to the battery-facing opening 114 (i.e., a battery-facing exhaust opening) defined in the battery interface 102. The battery-cooling airflow A1 is directed from the battery-facing opening 114 in a direction that is perpendicular to the pack insertion direction D 1. In other embodiments, the battery-cooling fan 26 may be positioned elsewhere along the flow path (e.g., adjacent the battery-facing opening 114) and may instead direct the battery cooling airflow A1 from the battery-facing opening 114 to the front opening 86.

The electronics-cooling fan 34 (e.g., a single electronics-cooling fan 34 in the present embodiment) is disposed along a flow path of, and generates, the electronics-cooling airflow A2 through the housing 18, which directs the electronics-cooling airflow A2 between the rear opening 90 and the lateral opening 94, which are in fluid communication. The charging electronics 22, which are disposed in the housing 18, are disposed along the flow path of the electronics-cooling airflow A2. In one embodiment, the electronics-cooling fan 34 is positioned in the housing 18 adjacent the lateral opening 94 (e.g., a lateral intake opening) closer to the front opening 86 than to the rear opening 90, the electronics-cooling airflow A2 is directed from the lateral opening 94 to the rear opening 90 (e.g., a rear exhaust opening) of the housing 18. In another embodiment, the electronics-cooling fan 34 is positioned in the housing 18 adjacent the lateral opening 94 (e.g., a lateral intake opening) at approximately midway between the front opening 86 and the rear opening 90 and the electronics-cooling airflow A2 is directed from the lateral opening 94 to the rear opening 90 (e.g., rear exhaust opening) of the housing 18. In yet another embodiment, the electronics-cooling fan 34 is positioned in the housing 18 adjacent the rear opening 90 (e.g., rear intake opening) and the electronics-cooling airflow A2 is directed from the rear opening 90 to the lateral opening 94 (e.g., lateral exhaust opening). In the previously described embodiments, the flow path of the electronics-cooling airflow A2 is thereby directed across PCBA 136 and the cooling fin 140, which extends upward into the flow path from the PCBA 136.

The controller receives information from the battery pack 14 (e.g., temperature, state of charge, etc.) and the charging electronics 22 (e.g., temperature) and controls the rotational speeds of the battery-cooling fan 26 and the electronics-cooling fan 34, thereby controlling the speed of the battery-cooling airflow A1 and the speed of the electronics-cooling airflow A2.

The duct 30 separates the battery-cooling airflow A1 and the electronics-cooling airflow A2 such that the flow path of the battery-cooling airflow A1 between the front opening 86 and the battery-facing opening 114 is a discrete flow path from the electronics-cooling airflow A2 between the lateral opening 94 and the rear opening 90.

When used uncovered outdoors or indoors where wet conditions are present, water may enter the battery charger 10 through the battery-facing opening 114. In that regard, the duct 30 defines a drainage path for water entering the battery charger 10 to flow through the duct 30 without otherwise entering the housing 18 to contact the charging electronics 22. The duct 30 directs the water to the front opening 86, which allows drainage of the water as a result of the angled orientation of the front opening 86 relative to vertical. In addition, by providing an efficient seal between the duct 30 and the housing 18, the duct 30 more efficiently directs the battery-cooling airflow A1 to the battery-facing opening 114 instead of permitting substantial portions of the battery-cooling airflow A1 to mix with the electronics-cooling airflow A2 within the housing 18.

## Claims

1. A battery charger for a battery pack, the battery charger comprising:
a housing including
a battery interface having a battery pack attachment portion,
a battery-facing opening defined in the battery interface and at least partially surrounding the battery pack attachment portion,
a front opening defined in the housing, the front opening in fluid communication with the battery-facing opening,
a rear opening defined in the housing,
a lateral opening defined in the housing, the lateral opening in fluid communication with the rear opening, the lateral opening disposed at a location along a length of the housing between the front opening and the rear opening;
a battery-cooling fan disposed between the battery-facing opening and the front opening;
a duct forming a discrete flow path between the battery-facing opening and the front opening;
charging electronics disposed in the housing between the rear opening and the lateral opening, the charging electronics including a printed circuit board assembly; and
an electronics-cooling fan disposed in the housing between the rear opening and the lateral opening.

2. The battery charger of claim 1, further comprising a backing plate, the backing plate disposed at least partially in the duct.

3. The battery charger of claim 2, wherein the battery-facing openings are disposed on opposite sides of the backing plate.

4. The battery charger of claim 2, wherein the backing plate is sealed and water is directed from the backing plate into the duct.

5. The battery charger of claim 4, wherein the front opening is disposed at an angle relative to vertical to allow water to drain from the duct.

6. The battery charger of claim 1, wherein the duct separates the battery-cooling fan from the charging electronics.

7. The battery charger of claim 1, wherein a rotational axis of the battery-cooling fan is parallel to a pack insertion direction.

8. The battery charger of claim 1, wherein a battery-cooling fan speed is based on a temperature of the battery pack.

9. The battery charger of claim 1, wherein a battery-cooling fan speed is based on a state of charge of the battery pack.

10. The battery charger of claim 1, wherein a rotational axis of the electronics-cooling fan is parallel to the printed circuit board assembly.

11. The battery charger of claim 1, wherein a rotational axis of the battery-cooling fan and a rotational axis of the electronics-cooling fan form skew lines.

12. A battery charger for a battery pack, the battery charger comprising:
a housing having a front, a rear, a lateral side, and a battery interface;
a duct configured to direct a battery-cooling airflow through the front of the housing and through the battery interface;
a battery-cooling fan disposed in the housing along a flow path of the battery-cooling airflow,
wherein the housing is configured to direct an electronics-cooling airflow through the lateral side of the housing and through the rear of the housing;
an electronics-cooling fan disposed in the housing along a flow path of the electronics-cooling airflow; and
charging electronics disposed in the housing along the flow path of the electronics-cooling airflow,
wherein the duct separates the battery-cooling airflow from the electronics-cooling airflow.

13. The battery charger of claim 12, wherein the battery-cooling airflow is directed from the front of the housing to the battery interface.

14. The battery charger of claim 12, wherein the electronics-cooling airflow is directed from the lateral side of the housing to the rear of the housing.

15. The battery charger of claim 12, the charging electronics including a printed circuit board assembly and a cooling fin extending upward from the printed circuit board assembly in the flow path of the electronics-cooling airflow.

16. The battery charger of claim 12, wherein the duct is sealed to the housing at a sealing interface, the sealing interface permitting less than a threshold of the battery-cooling airflow through the sealing interface, the threshold defining a seal efficiency.

17. The battery charger of claim 12, wherein a speed of the battery-cooling airflow is based on a temperature of the battery pack.

18. The battery charger of claim 12, wherein a speed of the battery-cooling airflow is based on a state of charge of the battery pack.

19. The battery charger of claim 12, wherein a speed of the electronics-cooling airflow is based on a temperature of the charging electronics.

20. A battery charger for a battery pack, the battery charger comprising:
a housing including
a battery interface having a battery pack attachment portion,
a battery-facing exhaust opening defined in the battery interface and at least partially surrounding the battery pack attachment portion,
a front intake opening defined in the housing, the front intake opening in fluid communication with the battery-facing exhaust opening,
a rear exhaust opening defined in the housing,
a lateral intake opening defined in the housing, the lateral intake opening in fluid communication with the rear exhaust opening, the lateral intake opening disposed on one side of the housing at a location along a length of the housing between the front intake opening and the rear exhaust opening;
a single battery-cooling fan mounted to the housing adjacent the front intake opening;
a duct forming a discrete flow path from the front intake opening to the battery-facing exhaust opening;
charging electronics disposed in the housing downstream from the lateral intake opening and upstream of the rear exhaust opening; and
a single electronics-cooling fan disposed in the housing adjacent the lateral intake opening.
